(19) Europäisches Patentamt

European Patent Office

Office européen des brevets

(11) Veröffentlichungsnummer: **0 257 210 B1**

(12) **EUROPÄISCHE PATENTSCHRIFT**

(45) Veröffentlichungstag der Patentschrift: **04.11.92**

(21) Anmeldenummer: **87107628.7**

(22) Anmeldetag: **26.05.87**

(51) Int. Cl.⁵: **G01B 21/02**, G01D 5/26

(54) **Gekapselte Positionsmesseinrichtung.**

(30) Priorität: **06.08.86 DE 8621056 U**

(43) Veröffentlichungstag der Anmeldung:
**02.03.88 Patentblatt 88/09**

(45) Bekanntmachung des Hinweises auf die
Patenterteilung:
**04.11.92 Patentblatt 92/45**

(84) Benannte Vertragsstaaten:
**DE FR GB IT**

56 Entgegenhaltungen:
**CH-A- 646 783**
**DD-A- 120 707**

**DR. JOHANNES HEIDENHAIN, Firmenprospekt "Gekapseltes Universal-Längenmesssystem ULS, Walzspalt-Messsystem WMS", Februar 1982**

73 Patentinhaber: **Dr. Johannes Heidenhain GmbH**
**Dr.-Johannes-Heidenhain-Strasse 5 Postfach 1260**
**W-8225 Traunreut(DE)**

72 Erfinder: **Affa, Alfred, Ing. (grad.)**
**Hochfellnstrasse 6**
**W-8221 Stein(DE)**

## Beschreibung

Die Erfindung betrifft eine gekapselte Positionsmeßeinrichtung gemäß dem Oberbegriff des Patentanspruchs 1.

Eine derartige Positionsmeßeinrichtung wird insbesondere zur Ermittlung der Relativlage von Werkstück und Werkzeug bei numerisch gesteuerten Bearbeitungsmaschinen eingesetzt.

In der DD-A 120 707 ist eine Längenmeßeinrichtung beschrieben, bei der die Gehäuseöffnung mit Hilfe einer am Gehäuse starr befestigten Gleitdichtung und eines Schutzrohres abgedichtet ist. Das Schutzrohr umhüllt die Schubstange und ist gelenkig an einem Anbauflansch befestigt. Das Schutzrohr muß über die gesamte Meßlänge reichen und stabil ausgeführt sein. Querkräfte werden nicht gleichmäßig über die gesamte Meßlänge aufgenommen.

Aus dem Firmenprospekt "Gekapseltes Universal-Längenmeßsystem ULS, Walzspalt-Meßsystem WMS" Ausgabe Februar 1982 der DR. JOHANNES HEIDENHAIN GmbH, Traunreut, ist ebenfalls eine derartige Positionsmeßeinrichtung bekannt, bei der eine Gehäuseöffnung für den Durchtritt einer Schubstange abgedichtet ist. Eine in Meßrichtung steife und senkrecht dazu auslenkbare Dichteinheit der Gehäuseöffnung ist über ein in Meßrichtung ausgerichtetes Schlauchstück aus Kunststoff an dem Gehäuse befestigt. Um das Schlauchstück in Meßrichtung steif zu halten, muß es mit einer verhältnismäßig dicken Wandung ausgebildet werden. Dies hat aber den Nachteil, daß bei Verlagerungen des Gehäuses gegenüber der Schubstange und daraus resultierenden Relativbewegungen der Dichteinheit gegenüber dem Gehäuse senkrecht zur Meßrichtung Zwangskräfte auf die Schubstange einwirken. Zwangskräfte auf die Schubstange führen zu Verbiegungen der Schubstange und diese Verbiegungen wiederum zu Verlagerungen des Abtastwagens und somit zu Meßfehlern. Ungleichmäßig radiale Zwangskräfte von der Schubstange auf die Dichteinheit einwirkend, führen zu einer fehlerhaften Abdichtung der Durchtrittsöffnung.

Der Erfindung liegt die Aufgabe zugrunde, eine gekapselte Positionsmeßeinrichtung der oben genannten Gattung anzugeben, bei der eine hohe Meßgenauigkeit sowie eine sichere Abdichtung der Gehäuseöffnung gegenüber der Schubstange gewährleistet ist.

Diese Aufgabe wird erfindungsgemäß durch die Merkmale des Patentanspruchs 1 gelöst.

Der mit der Erfindung erzielte Vorteil besteht insbesondere darin, daß die Dichteinheit gegenüber dem Gehäuse in Meßrichtung stabil gehalten wird, aber Winkelbewegungen und Parallelverschiebungen zwischen dem Gehäuse und der Dichteinheit quer zur Meßrichtung möglich sind, ohne daß störende Zwangskräfte auf die Schubstange bzw. auf die Dichteinheit ausgeübt werden. Dadurch ist eine hohe Meßgenauigkeit gewährleistet.

Vorteilhafte Ausbildungen der Erfindung sind in den abhängigen Patentansprüchen angegeben.

Ausführungsbeispiele der Erfindung werden anhand der Zeichnungen näher erläutert.

Es zeigt

Figur 1      eine gekapselte Positionsmeßeinrichtung gemäß der Erfindung im Querschnitt,

Figur 2      einen Schnitt nach der Linie II-II in Figur 1,

Figur 3      einen Teilschnitt einer weiteren Ausführungsform der Positionsmeßeinrichtung,

Figur 4      einen Schnitt nach der Linie IV-IV in Figur 3.

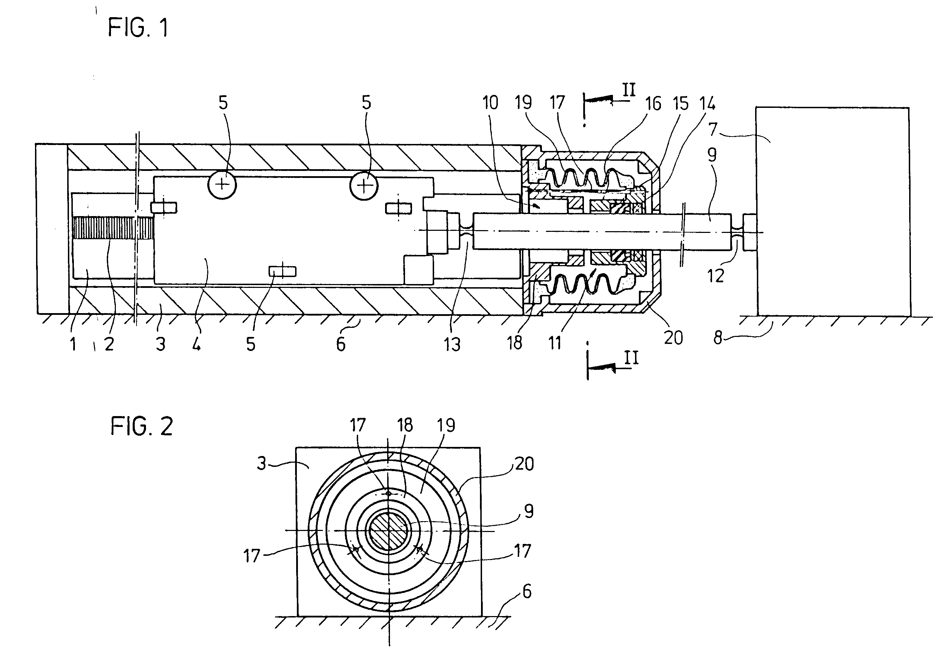

In Figur 1 und 2 ist in zwei Ansichten eine gekapselte Positionsmeßeinrichtung gezeigt. Ein Glasmaßstab 1 mit einer inkrementalen Teilung 2 ist als Maßverkörperung in ein Gehäuse 3 eingeklebt. Eine photoelektrische Abtasteinheit 4 wird mittels Rollen 5 reibungsarm auf dem Glasmaßstab 1 sowie an inneren Gehäuseflächen geführt. Zur Messung der Relativbewegung zweier Maschinenteile ist das Gehäuse 3 an einem Maschinenbett 6 befestigt und ein Anbaustück 7 an einem Maschinenschlitten 8. Eine Schubstange 9 verbindet das Anbaustück 7 mit der Abtasteinheit 4, so daß Relativbewegungen des Maschinenschlittens 8 in Meßrichtung auf die Abtasteinheit 4 übertragen werden. Dabei bewegt sich die Schubstange 9 durch eine stirnseitige Gehäuseöffnung 10.

Die Gehäuseöffnung 10 ist zwischen dem Gehäuse 3 und der Schubstange 9 mit einer Dichteinheit 11 hermetisch abgedichtet. Damit ist die Abtasteinheit 4 und die inkrementale Teilung 2 vor schädlichen Umwelteinflüssen, wie Staub und Flüssigkeiten, geschützt. Durch Fertigungstoleranzen kann es beim Anbau des Gehäuses 3 an das Maschinenbett 6 und des Anbaustückes 7 an den Maschinenschlitten 8 zu Fehlausrichtungen der Schubstange 9 senkrecht zur Meßrichtung und somit senkrecht zu der Gehäuselängserstreckung sowie zu Winkelverlagerungen kommen. Die Schubstange 9 ist über ein in Meßrichtung steifes Gelenk 12 an das Anbaustück 7 und mit einem weiteren Gelenk 13 an die Abtasteinheit 4 angekoppelt. Damit wirken bei derartigen Verlagerungen beim Anbau bzw. beim Meßvorgang keine störenden Zwangskräfte auf die Abtasteinheit 4. Diese Gelenke 12, 13 in Form von Schwachstellen erlauben geringe Relativbewegungen - Winkelbewegungen sowie Bewegungen senkrecht zur Meßrichtung - zwischen dem Anbaustück 7 und der im Gehäuse 3 geführten Abtasteinheit 4.

Die Dichteinheit 11 ist auslenkbar am Gehäuse 3 gelagert. Durch diese Maßnahme ist eine sichere Abdichtung der Gehäuseöffnung 10 auch bei Verlagerungen der Schubstange 9 gewährleistet. Die Dichteinheit 11 besteht aus einem Abstreifer 14 und einem Dichtring 15, die in einem Halter 16 untergebracht sind. Der Halter 16 ist über drei in Meßrichtung steife Drähte 17 mittels eines Zwischenstückes 18 am Gehäuse 3 befestigt. Die drei Drähte 17 sind um jeweils 120 Grad versetzt konzentrisch zur Gehäuseöffnung 10 angebracht. Reibkräfte der Schubstange 9 auf die Dichteinheit 11 in axialer Richtung werden von den Drähten 17 aufgenommen, wogegen die Dichteinheit 11 radialen Auslenkungen der Schubstange 9 folgt, ohne größere seitliche Kräfte auf die Schubstange 9 auszuüben. Im Bereich dar Drähte 17 ist zwischen dem Halter 16 und dem Gehäuse 3 ein in allen Richtungen flexibler Balg 19 zur Abdichtung dieses Bereiches angebracht. Zum Schutz vor Spänen oder dergleichen ist die Dichteinheit 11 und der flexible Balg 19 von einer am Gehäuse 3 befestigten Schutzhaube 20 aus Metall umgeben.

In einer nicht gezeigten Ausführung kann die Verbindung der Dichteinheit mit dem Gehäuse auch nur über zwei um 180 Grad zueinander radial versetzt angeordnete Drähte erfolgen.

Weiterhin können als Verbindungselemente Stäbe verwendet werden, die jeweils zwei in Meßrichtung beabstandete Schwachstellen als Gelenke aufweisen, und im übrigen Bereich in allen Richtungen steif sind.

Die Stäbe können auch jeweils über Kugeilagerungen das Gehäuse und die Dichteinheit winkelbeweglich miteinander verbinden.

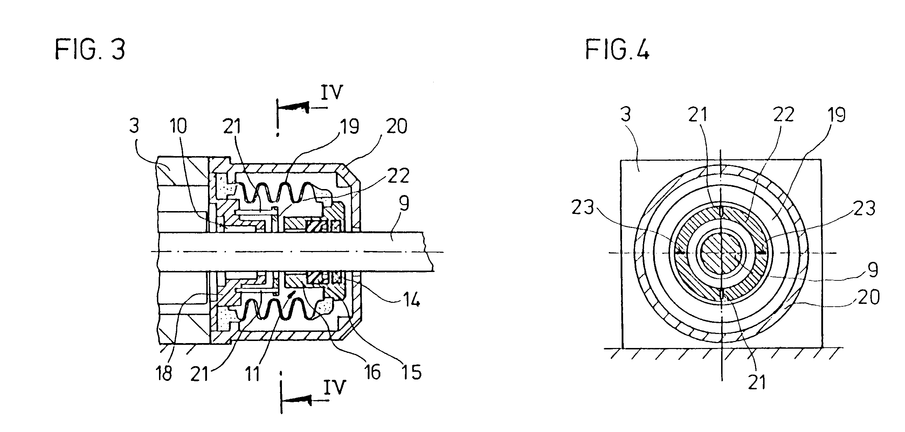

Die Figuren 3 und 4 zeigen ein weiteres Ausführungsbeispiel der Erfindung. Dabei sind Teile, die mit den Teilen aus Figur 1 und 2 baugleich sind, mit den gleichen Bezugszeichen versehen.

Zwei Blattfedern 21, die um die Gehäuseöffnung 10 um 180 Grad radial gegeneinander versetzt sind, sind mit ihren einen Enden über das Zwischenstück 18 am Gehäuse 3 und mit den anderen Enden an einem Ring 22 befestigt. Die Blattfedern 21 als erstes Gelenk sind so angeordnet, daß sie parallel zur Meßrichtung und in einer Ebene liegen. Senkrecht zu der Ebene, in der die Blattfedern 21 liegen, sind zwei weitere Blattfedern 23 als zweites Gelenk parallel zueinander angeorunet. Die Blattfedern 23 sind mit jeweils einem Ende in dem Ring 22, und mit dem anderen Ende jeweils mit der Dichteinheit 11 verbunden. Die Längsachsen der Blattfedern 21 und 23 verlaufen parallel zur Längsachse des Gehäuses 3.

Die ersten Blattfedern 21 erlauben eine Winkelbewegung der Dichteinheit 11 senkrecht zur Meßrichtung. Die zweiten Blattfedern 23, die zu den ersten Blattfedern 21 jeweils um 90 Grad radial zueinander versetzt angeordnet sind, erlauben eine weitere Winkelbewegung senkrecht zur Meßrichtung und senkrecht zur ersten Winkelbewegung. Dies bedeutet, daß Relativbewegungen - Winkelbewegungen und/oder Parallelverschiebungen - der Dichteinheit 11 gegenüber dem Gehäuse 3 in allen Richtungen (außer in Meßrichtung), ohne störende Zwangskräfte auf die Schubstange 9 auszuüben, möglich sind. Die Steifigkeit in Meßrichtung ist durch die Blattfedern 21, 23 gewährleistet. Die zusätzliche Schutzvorrichtung, bestehend aus dem Balg 19 und der Schutzhaube 20, kann auch bei dieser Ausführung die Blattfedern 21, 23 und die Dichteinheit 11 umgeben.

In nicht gezeigter Ausführung können anstelle der Blattfedern auch knicksteife, parallel zur Meßrichtung verlaufende Drähte oder Stäbe mit Gelenken Verwendung finden.

Die Erfindung ist nicht auf die gezeigte inkrementale photoelektrische Meßeinrichtung beschränkt. Sie schließt auch andere Meßeinrichtungen ein, beispielsweise kapazitive, magnetische und induktive Einrichtungen inkrementaler oder absoluter Art.

**Patentansprüche**

1. Gekapselte Positionsmeßeinrichtung zur Messung der Relativlage zweier relativ zueinander beweglicher Objekte (6, 8), bei der eine Maßverkörperung (2) eines in einem Gehäuse (3) befestigten Trägers (1) von einer, im Gehäuse (3) gelagerten Abtasteinheit (4) abgetastet wird und elektrische Abtastsignale erzeugt werden, bei der ferner das Gehäuse (3) am ersten Objekt (6) befestigt und die Abtasteinheit (4) über eine Schubstange (9) am anderen Objekt (8) befestigt ist, wobei eine Gehäuseöffnung (10) für die Schubstange (9) von einer in Meßrichtung steifen, aber quer zur Meßrichtung sich der Schubstangenlage anpassenden Dichteinheit (11) abgedichtet wird, dadurch gekennzeichnet, daß die Dichteinheit (11) zumindest über in Meßrichtung steife und quer dazu auslenkbare, sich in Meßrichtung erstreckende und parallel zur Schubstange (9) verlaufende Drähte (17), Blattfedern (21, 23) oder Stäbe am Gehäuse (3) befestigt ist.

2. Gekapselte Positionsmeßeinrichtung nach Anspruch 1, dadurch gekennzeichnet, daß die Dichteinheit (11) über drei um jeweils radial 120 Grad gegeneinander versetzte, zur Gehäuseöffnung (10) konzentrisch angeordnete und in Meßrichtung knicksteife Drähte (17) am Gehäuse (3) befestigt ist.

3. Gekapselte Positionsmeßeinrichtung nach Anspruch 1, dadurch gekennzeichnet, daß die Stäbe zwei in Längsrichtung voneinander beabstandete Schwachstellen als Gelenke aufweisen.

4. Gekapselte Positionsmeßeinrichtung nach Anspruch 1, dadurch gekennzeichnet, daß am Gehäuse (3) die einen Enden zweier in einer Ebene liegender, um 180 Grad radial gegeneinander versetzter Blattfedern (21) als Gelenk befestigt und die anderen Enden in einem Ring (22) befestigt sind, daß ferner die einen Enden zweier weiterer Blattfedern (23) im Ring (22) und die anderen Enden an der Dichteinheit (11) befestigt sind, so daß sich ein weiteres Gelenk mit einer Möglichkeit der Schwenkbewegung und Parallelverschiebung quer zum Ersten Gelenk und quer zur Meßrichtung ergibt.

5. Gekapselte Positionsmeßeinrichtung nach Anspruch 1, dadurch gekennzeichnet, daß am Gehäuse die einen Enden zweier um 180 Grad radial versetzt angeordneter knicksteifer Drähte als Gelenk befestigt und die anderen Enden in einem Ring befestigt sind, daß ferner zwei weitere knicksteife Drähte als Gelenk zu den ersten Drähten um jeweils 90 Grad radial gegeneinander versetzt mit dem einen Ende am Ring und mit dem anderen Ende an der Dichteinheit befestigt sind.

## Claims

1. An encapsulated position measuring device for measuring the relative position of two objects (6, 8) movable relative to one another, in which a measuring element (2) of a support (1) fixed in a housing (3) is sensed by a sensing unit (4) mounted in the housing (3) and electrical sensing signals are generated, further in which the housing (3) is fixed to the first object (6) and the sensing unit (4) is fixed to the other object (8) by means of a connecting rod (9), wherein a housing opening (10) for the connecting rod (9) is sealed by a sealing unit (11) which is stiff in the measuring direction but adapts to the position of the connecting rod transverse to the measuring direction, characterized in that the sealing unit (11) is fixed to the housing (3) at least by wires (17), leaf springs (21, 23) or rods which are stiff in the measuring direction and capable of deflection transversely thereto and extend in the measuring direction and parallel to the connecting rod (9).

2. An encapsulated position measuring device according to claim 1, characterized in that the sealing unit (11) is fixed to the housing (3) by three wires (17) which are arranged concentrically with the housing opening (10) on radii spaced at intervals of 120° and are stiff against kinking in the measuring direction.

3. An encapsulated position measuring device according to claim 1, characterized in that the rods have two longitudinally spaced weak points acting as hinges.

4. An encapsulated position measuring device according to claim 1, characterized in that the one ends of two leaf springs (21) are fixed to the housing (3) to form a hinge, the leaf springs lying in a plane on two radii offset from each other by 180°, the other ends of the leaf springs being fixed to a ring (22), further in that the one ends of two further leaf springs (23) are fixed in the ring (22) and the other ends to the sealing unit (11), so that a further hinge results capable of swinging movement and parallel displacement transverse to the first hinge and transverse to the measuring direction.

5. An encapsulated position measuring device according to claim 1, characterized in that the one ends of two wires which are stiff against bending are fixed as a hinge to the housing on two radii offset by 180° and the other ends are fixed to a ring, further in that two further wires which are stiff against bending are fixed as a hinge at one end to the ring and at the other end to the sealing unit, offset relative to the first wires on radii at 90° thereto.

## Revendications

1. Dispositif de mesure de position étanche pour la mesure de la position relative de deux objets (6, 8) mobiles l'un par rapport à l'autre, dans lequel une mesure matérialisée (2) d'un support (1) fixé dans un boîtier (3) est lue par une unité de lecture (4) montée à l'intérieur du boîtier (3) et des signaux de lecture électriques sont produits, dans lequel, en outre, le boîtier (3) est lié au premier objet (6) et l'unité de lecture est liée à l'autre objet (8) par l'intermédiaire d'une biellette (9), une ouverture de boîtier (10) pour le passage de la biellette (9) étant fermée de manière étanche par un dispositif d'étanchéité (11) qui est rigide dans la direction de mesure mais est susceptible de s'adapter à la position de la biellette dans la direction transversale par rapport à la direction de mesure, caractérisé par le fait que le dispositif d'étanchéité (11) est fixé sur le boîtier (3) au moins au moyen de fils (17), de ressorts à lames (21, 23) ou de tiges qui s'étendent dans la direction de mesure, parallèlement à la biellette (9), sont rigides dans la direction de mesure et peuvent se déplacer dans la direction transversale par rapport à la direction de mesure.

2. Dispositif de mesure de position étanche selon la revendication 1, caractérisé par le fait que le dispositif d'étanchéité (11) est fixé sur le boîtier (3) par l'intermédiaire de trois fils (17) rigides en flexion dans la direction de mesure qui sont disposés de manière concentrique avec l'ouverture de boîtier (10) et sont respectivement décalés radialement de 120 degrés les uns par rapport aux autres.

3. Dispositif de mesure de position étanche selon la revendication 1, caractérisé par le fait que les tiges comportent, comme articulations, deux points faibles disposés à distance l'un de l'autre dans la direction longitudinale.

4. Dispositif de mesure de position étanche selon la revendication 1, caractérisé par le fait que l'une des extrémités de deux ressorts à lames (21), situés dans un plan et décalés radialement de 180 degrés l'un par rapport à l'autre est fixée comme articulation sur le boîtier (3), tandis que l'autre extrémité est fixée dans un anneau (22), que par ailleurs, l'une des extrémités de deux ressorts à lames (23) supplémentaires est fixée sur le dispositif d'étanchéité (11) de manière à obtenir une articulation supplémentaire avec possibilité de pivotement et de déplacement parallèle, transversalement par rapport à la première articulation et à la direction de mesure.

5. Dispositif de mesure de position étanche selon la revendication 1, caractérisé par le fait que l'une des extrémités de deux fils, rigides en flexion et décalés radialement de 180 degrés, est fixée comme articulation sur le boîtier, tandis que l'autre extrémité est fixée dans un anneau, que par ailleurs, deux fils supplémentaires, rigides en flexion, faisant office d'articulation, sont décalés mutuellement de 90 degrés par rapport aux premiers fils et sont fixés par une extrémité à l'anneau et par l'autre extrémité au dispositif d'étanchéité.

FIG. 1

EP 0 257 210 B1

FIG. 2

FIG. 4

FIG. 3